# EUROPEAN PATENT SPECIFICATION

(11) **EP 3 886 203 B1**
(45) Date of publication and mention of the grant of the patent: **29.06.2022**
(21) Application number: 20166379.6
(22) Date of filing: 27.03.2020
(51) Int. Cl.: H01M 50/209, H01M 50/291, H01M 50/293, H01M 50/258

(54) **A METHOD FOR ASSEMBLING A STACK OF PRISMATIC BATTERY CELLS, A STACK OF PRISMATIC BATTERY CELLS, A BATTERY MODULE AND A VEHICLE INCLUDING A BATTERY PACK COMPRISING AT LEAST ONE BATTERY MODULE**
VERFAHREN ZUM ZUSAMMENBAU EINES STAPELS PRISMATISCHER BATTERIEZELLEN, STAPEL VON PRISMATISCHEN BATTERIEZELLEN, BATTERIEMODUL UND FAHRZEUG MIT EINEM BATTERIEPACK MIT MINDESTENS EINEM BATTERIEMODUL
PROCÉDÉ D'ASSEMBLAGE D'UN EMPILEMENT DE CELLULES DE BATTERIE PRISMATIQUES, EMPILEMENT DE CELLULES DE BATTERIE PRISMATIQUES, MODULE DE BATTERIE ET VÉHICULE INCLUANT UN BLOC-BATTERIE COMPRENANT AU MOINS UN MODULE DE BATTERIE

(43) Date of publication of application: 29.09.2021
(73) Proprietor: Samsung SDI Co., Ltd., Gyeonggi-do 17084 (KR)
(72) Inventor: Rath, Helmut, 8481 St. Veits / Südstmk. (AT)
(74) Representative: Gulde & Partner

(56) References cited:
- EP-A2- 2 506 335
- DE-A1-102012 216 123
- DE-A1-102017 210 744
- US-A1- 2009 311 581
- US-A1- 2010 143 785
- US-A1- 2012 121 944
- Dupont: "Nomex Type 410", , 5 August 2016 (2016-08-05), XP002798980, Retrieved from the Internet: URL:https://web.archive.org/web/2016080519 1102/https://www.ukinsulations.co.uk/pdfs/ dupont-nomex-type-410.pdf [retrieved on 2020-05-12]

## Description

### Field of the Invention

The present invention relates to a method for assembling a stack of (prismatic) battery cells, a stack of prismatic battery cells, a battery module and a vehicle including a battery pack comprising at least one battery module.

### Technological Background

In the recent years, vehicles for transportation of goods and people have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g., cylindrical or rectangular, depends on the battery's intended purpose. Lithium-ion (and similar lithium polymer) batteries, widely known via their use in laptops and consumer electronics, dominate the most recent group of electric vehicles in development. Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules and the interconnections, which provide electrical conductivity between them.

The mechanical integration of such a battery pack requires appropriate mechanical connections between the individual components, e.g., of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g., an electric vehicle. Thus, the replacement of defect system parts, e.g., a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g., in the mechanic's workshop, of the bulky battery systems becomes difficult.

The actual design of a cell spacer is a separate single part, which is applied manually. A liner has to be first removed and then the cell spacer is glued inside the housing of the battery cell module. This leads to an increase in the cost of production as a whole.

WO 2013/083237 A1 discloses a spacer for electrically insulating a prismatic battery cell from another prismatic battery cell or from another structural component and JP 5585524 B2 discloses that spacers and cooling plates are arranged between battery unit cells.

Document DE 10 2017 210744 A1 discloses an electrochemical battery cell for a battery module and a method for producing a battery cell and battery module by applying an electrically insulating layer to the cell housing of the battery cell.

Document DE 10 2012 216123 A1 discloses a cell housing for partially enclosing cell space of battery of battery system, which has electrically insulating layer made from ceramic material, which is arranged on inside/outside of the cell housing.

Document US 2012/121944 A1 discloses a battery pack including a formed portion coating at least a portion of the outer surface of a battery or a plurality of battery packs with reactioncurable resin, and spacers having dimension-absorbing ability and attached to the rear surface of the formed portion.

Document EP 2 506 335 A2 discloses a battery pack comprising a spacer mounted between the pack case and the battery cell array.

Document DuPont: "Nomex Type 410", retrieved from the internet: URL: https://www.ukinsulations.co.uk/pdfs/dupont-nomex-type-410.pdf, retrieved on 2020.05.27, discloses insulation papers with specific electrical and mechanical properties.

Document US 2009/311581 A1 discloses a stack of prismatic battery cells being arranged with their longitudinal sides abutting each other. To the cell body of each unit cell are attached two double-sided adhesive tapes, by which a stable coupling between the stacked unit cells should be further secured. Furthermore, the stacked unit cells are spaced apart from each other by the thickness of the double-sided adhesive tapes. By the gap between the stacked unit cells, a change in volume during the charge and discharge of the unit cells is allowed.

US2009/311581A1 discloses a stack of prismatic battery cells (100, 101) being arranged with their longitudinal sides abutting each other, wherein spacer stripes (800) are adhered on both longitudinal sides (once stacked, the double-sided adhesive tape sticks to both the cell above and below, meaning that each cell has two adhesive layers on each of the main faces) of each battery cell, wherein the spacer stripe is adapted such that a central portion ("pre-determined gap" of para. 40) of the respective longitudinal side remains uncovered. Regarding the thickness of the adhesive tape, this document explicitly states that the thickness of the tape defines the available space for volume expansion of the cells (see para. 72). Regarding the width of the adhesive tape, this document explicitly states that they should be spaced apart so as to allow the space for volume expansion (see para. 40).

### Summary of Invention

The invention is defined by the appended claims. The description that follows is subjected to this limitation. Any disclosure lying outside the scope of said claims is only intended for illustrative as well as comparative purposes.

Embodiments of the present disclosure seek to solve at least one of the problems existing in the prior art to at least some extent. In particular, a method of assembling a stack of Z prismatic battery cells as defined in claim 1 is provided, wherein the battery cells in the stack are arranged with their longitudinal sides abutting each other; the method is carried out on a production line and comprises the following steps:
(i) providing a first device unit for handling the battery cells;
(ii) providing a second device unit for supporting a roll of a spacer foil and assembling the spacer foil to the battery cells, the spacer foil being self-adhesive and having a thickness of 300 µm to 550 µm (micro meter), wherein a width of the spacer foil is predetermined such that a ratio of the width of the spacer foil to the height of the longitudinal side of the battery cell is in the range of 1:4 to 1:12; and
(iii) adhering spacer stripes from the roll of the spacer foil by means of the second device unit on both longitudinal sides of each battery cell, wherein the spacer stripe is adapted such that a central portion of the respective longitudinal side remains uncovered, wherein the spacer stripes adhered to opposing longitudinal sides of neighboring battery cells come into contact with each other when the battery cells are assembled in the stack.

According to an embodiment, the step of adhering may comprise:
(i) adhering two first spacer stripes from the roll of the spacer foil, one on each of the longitudinal sides adjacent and parallel to an upper edge of the battery cell; and
(ii) adhering two second spacer stripes from the roll of the spacer foil, one on each of the longitudinal sides adjacent and parallel to a bottom edge of the battery cell.

According to another embodiment, the step of adhering may comprise:
(i) adhering a first spacer stripe from the roll of the spacer foil by wrapping the first spacer stripe around a case of the battery cell adjacent and parallel to an upper edge of the battery cell; and
(ii) adhering a second spacer stripe from the roll of the spacer foil by wrapping the second spacer stripe around the case battery cell adjacent and parallel to a bottom edge of the battery cell.

According to an embodiment, the step of adhering may comprise:
(i) adhering two first spacer stripes from the roll of the spacer foil, one on each of the longitudinal sides adjacent and parallel to an upper edge of the battery cell;
(ii) adhering four transverse spacer stripes from the roll of the spacer foil, two on each of the respective longitudinal sides of the battery cell, wherein each of the transverse spacer stripes may be adhered adjacent and parallel to a corresponding transverse side of the battery cell and may extend below the respective first spacer stripe to a bottom edge of the battery cell; and
(iii) adhering two second spacer stripes from the roll of the spacer foil, one on each of the longitudinal sides adjacent and parallel to a bottom edge of the battery cell, wherein each of the second spacer stripes may be adhered in a space between the two transverse spacer stripes and parallel to the bottom edge of the battery cell.

The second spacer stripe may be adhered at a predefined distance lying within a range of 5.5 mm to 6.5 mm from the bottom edge. The width of the spacer stripe may lie within a range of 12 mm to 15 mm. The spacer stripe may be made of an electrically insulating and thermally insulating plastic material.

According to an embodiment, the method may comprise a step of applying electrical isolation onto at least one of the longitudinal sides prior to the step of adhering at least one of the spacer stripes, wherein the at least one spacer stripe may be adhered to the electrical isolation of the corresponding longitudinal side.

According to another embodiment, the method may comprise a step of stacking the battery cells in a battery module after the step of adhering at least one of the spacer stripes to each of the corresponding longitudinal side of the corresponding battery cell.

According to another aspect of the present invention, a stack of Z prismatic Z battery cells as defined in claim 10 is provided. The stack of prismatic Z battery cells are arranged with their longitudinal sides abutting each other, wherein spacer stripes are adhered on both longitudinal sides of each battery cell, wherein the spacer stripe is adapted such that a central portion of the respective longitudinal side remains uncovered, wherein the spacer stripes have a thickness of 300 µm to 550 µm and a width of each of the spacer stripes is such that a ratio of the width of the spacer stripe to the height of the longitudinal side of the battery cell is in the range of 1:4 to 1:12. The spacer stripes adhered to opposite longitudinal sides of neighboring battery cells are in contact with each other in the stack.

An electrical isolation may be adhered onto at least one of the longitudinal sides of the battery cells, wherein the at least one spacer stripe may be adhered to the electrical isolation of the corresponding longitudinal side.

The width of the spacer stripe may lie within a range of 12 mm to 15 mm. The spacer stripe may be made of an electrically insulating and thermally insulating plastic material.

According to another aspect of the present invention, a battery module comprising the stack of Z prismatic Z battery cells as defined above is provided.

According to another aspect of the present invention, a vehicle including a battery pack comprising at least one battery module as defined above is provided.

Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 illustrates a flow chart of a method for assembling a stack of prismatic battery cells according to an embodiment;
Fig. 2 illustrates a first perspective view of a prismatic battery cell with two spacer stripes on a longitudinal side of the battery cell according to an embodiment;
Fig. 3 illustrates a second perspective view of the prismatic battery cell with two spacer stripes on the longitudinal side of the battery cell according to the embodiment;
Fig. 4 illustrates a first perspective view of a prismatic battery cell with two spacer stripes wrapped around a cell housing of the battery cell according to an embodiment;
Fig. 5 illustrates a second perspective view of the prismatic battery cell with two spacer stripes two spacer stripes wrapped around the cell housing of the battery cell according to the embodiment;
Fig. 6 illustrates a schematic view of a prismatic battery cell with four spacer stripes on a longitudinal side of a battery cell according to an embodiment;
Fig. 7 illustrates a perspective view of both the longitudinal sides of the battery cell with four spacer stripes according to the embodiment;
Fig. 8 illustrates a sectional view of both a stack of the battery cells according to an embodiment;
Fig. 9 illustrates a flow chart of a method for assembling a stack of prismatic battery cells according to an embodiment; and
Fig. 10 illustrates a flow chart of a method for assembling a stack of prismatic battery cells according to an embodiment.

### Detailed Description of the Invention

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. These Z embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." It will be understood that although the terms "first" and "second" are used to describe various elements, these elements should not be limited by these terms. These terms are only used to distinguish one element from another element. For example, a first element may be named as a second element and, similarly, a second element may be named as a first Z element. Z

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. It will also be understood that when a component or an element is referred to as being "above" or "on" another component or element, it can be directly on the other component or element, or intervening components, or elements may also be present. Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

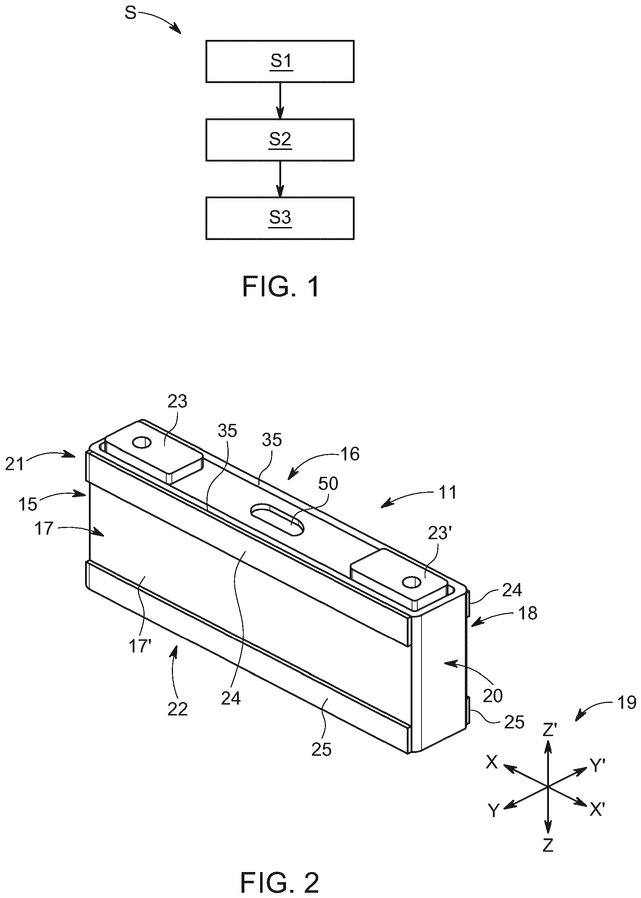

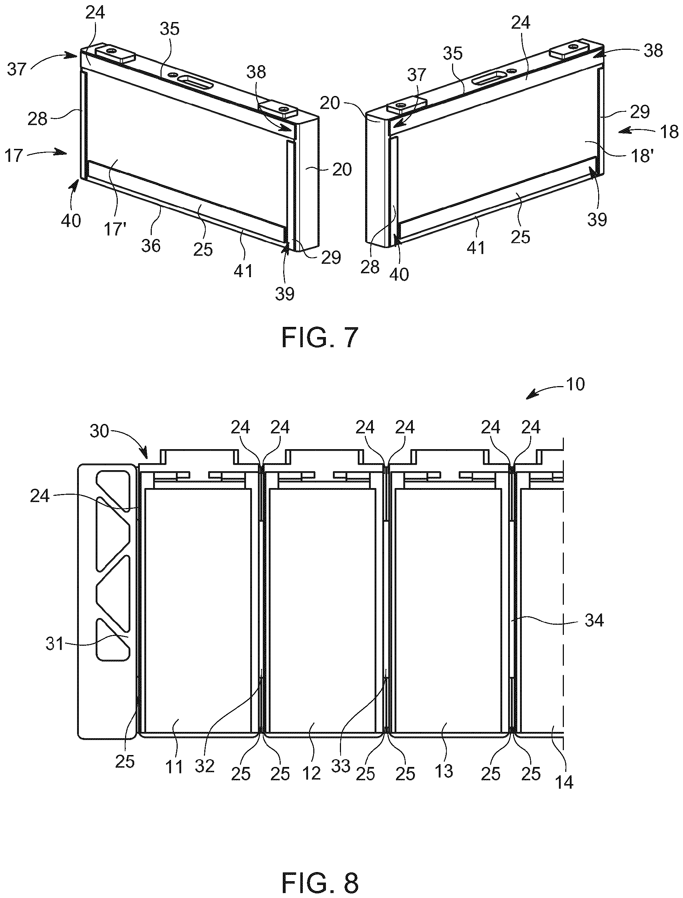

Fig. 1 shows a flow chart of a method S for assembling a stack 10 (as shown in Fig. 8) of prismatic battery cells 11, 12, 13, 14 according to an embodiment, for the sake of convenience, the prismatic battery cells 11, 12, 13, 14 may be referred to as the prismatic battery cell 11 or simply the battery cell 11.

As shown in Fig. 2, the battery cell 11 according to an embodiment includes an electrode assembly (not shown in figures), and a case 15 for accommodating the electrode assembly, the case 15 containing an electrolyte. The electrode assembly may be formed as a jelly roll type electrode assembly by spirally winding a positive electrode and a negative electrode with a separator therebetween, or a stacked type in which a plurality of positive electrodes and a plurality of negative electrodes are alternately stacked while having a separator interposed therebetween. The electrolyte may comprise lithium salt, such as LiPF6 or LiBF4 with an organic solvent, such as EC, PC, DEC, or EMC. The electrolyte solution may be in a liquid, solid, or a gel state.

The battery cell 11 is described as a non-limiting example of a lithium ion secondary battery configured to have a prismatic shape (or rectangular). The case 15 is configured to have a substantially cuboidal shape, and an opening may be formed at one side thereof. The case 15 may be formed of a metal, such as aluminum. The battery cell 11 comprises a cap assembly 16 for sealing the opening of the case 15. The case 15 of the battery cell 11 comprises two longitudinal sides 17, 18, comprising wide surfaces and facing each other normal to a direction YY' of a coordinate axis 19. The case 15 comprises two transverse sides 20, 21 comprising small surfaces and facing each other normal to a direction XX'.

The case 15 further comprises a base 22, such that the base 22, the two longitudinal sides 17, 18 and the two transverse sides 20, 21 form a space for accommodating the electrode assembly and the electrolyte. Furthermore, the case 15 is hermetically sealed by the cap assembly 16. The base 22 and the cap assembly 16 are parallel to each other and normal to a direction ZZ'. The cap assembly 16 is provided with positive and negative electrode terminals 23 and 23' having different polarities, and a vent 50. The vent 50 is a safety means of the battery cell 11, which acts as a passage through which gas generated in the battery cell 11 is exhausted to the outside of the battery cell 11.

According to the method S for assembling the stack 10 of prismatic battery cells 11, 12, 13, 14, the battery cells 11, 12, 13, 14 in the stack 10 are arranged with their longitudinal sides 17, 18 abutting each other. The method S is carried out on a production line, in other words, the method is carried out in an automated or semi-automated process, for example using robots, automated or semi-automated machineries which may be know to a person skilled in the art.

The method S comprises the following steps, starting with a first step S1 involving providing a first device unit (not shown in figures) for handling the battery cells 11, 12, 13, 14, the first device unit may be using robots, automated or semi-automated machineries.

The method S comprises a second step S2 which involves providing a second device unit (not shown in figures) for supporting a roll of a spacer foil and assembling the spacer foil to the battery cells. The spacer foil has a thickness of 300 µm to 550 µm. In other words, the thickness lying within the range of 300 to 550 µm and a stiffness of the spacer foil is chosen such that the spacer foil is able to be rolled on a roll. This in turn, would enable the supplying of the spacer foil by means of the second device unit, since the spacer foil can be easily supplied by unrolling of the spacer foil in an automatically controlled and predetermined manner. Furthermore, the spacer foil is self-adhesive. This is of advantage, because being self adhesive would enable the spacer foil to be adhered on to a surface in a comfortable manner upon unrolling the spacer foil from the roll. Furthermore, a width of the spacer foil is predetermined such that a ratio of the width of the spacer foil to the height of the longitudinal side 17, 18 of the battery cell 11 is in the range of 1:4 to 1:12.

Furthermore, the method S comprises a third step S3 which includes adhering spacer stripes 24, 25, 26, 27, 28, 29 from the roll of the spacer foil by means of the second device unit on both longitudinal sides 17, 18 of each battery cell 11, 12, 13, 14. This is of advantage, because it enables a full automatic application of the spacer stripes 24, 25, 26, 27, 28, 29 as a cell-spacer, which would lead to a decrease in the time and cost of assembling the stack 10 of prismatic battery cells 11, 12, 13, 14 as a whole. The spacer foil can be unrolled from the roll of the spacer foil by means of the second device unit and the spacer stripe 24, 25 can be attached to each of the longitudinal surfaces 17, 18 of the battery cell 11 automatically, as the spacer foil is self-adhesive.

The thickness of the spacer foil or the spacer stripe 24, 25, 26, 27, 28, 29 lies within the range of 300 µm to 550 µm, depending upon the available space for the module-length of a battery module 30, into which the stack 10 would be disposed. The thickness of the spacer stripe 24, 25, 26, 27, 28, 29 needed as a cell-spacer would be half of that of a cell-spacer known in the prior art, as the spacer stripes 24, 25, 26, 27, 28, 29 functioning as the cell-spacers are adhered to both the longitudinal sides 17, 18 of each of the battery cells 11, 12, 13, 14, as shown in Fig. 8. For example, the individual spacer stripes 24, 25 on the longitudinal side 18 of the first battery cell 11 would come in contact with the corresponding spacer stripes 24, 25 on the longitudinal side 17 of the second battery cell 12, when the battery cells 11, 12, 13, 14 are stacked and disposed in a module housing of the battery module 30. Hence, the combination of the spacer stripes 24, 25 on the longitudinal side 18 of the first battery cell 11 with that of the corresponding spacer stripes 24, 25 on the longitudinal side 17 of neighbouring the second battery cell 12 would form as a functioning cell-spacer between the first battery cell 11 and the second battery cell 12. Hence, a thickness of the spacer stripe 24, 25 needs to be half of that of an analogous individual cell-spacer. This reduction in the thickness of the spacer stripes 24, 25, 26, 27, 28, 29 or the spacer foil would enable a reduction in the stiffness of the spacer foil as a whole, hence, the spacer foil would be enabled to be disposed on the roll, which in turn enables an automatic application or adherence of the spacer stripes 24, 25, 26, 27, 28, 29 on the respective longitudinal sides 17, 18 of the respective battery cell 11 on a production line.

The automatic assembly process of adhering the spacer stripes 24, 25, 26, 27, 28, 29 to the battery cells 11, 12, 13, 14 is made efficiently possible by realizing the cell-spacers as foils (i.e., the spacer foil from the roll), as there is a plurality of well known cost effective automatic process of adhering foils to rigid surfaces which would be known to the person skilled in the art. To realize the cell-spacers as foils (instead of the well known thicker rigid frames), the spacer stripes 24, 25, 26, 27, 28, 29 are adhered on both longitudinal sides of each battery cell 11, 12, 13, 14, which allows the spacer stripe 24, 25, 26, 27, 28, 29 on each longitudinal side 17, 18 to have a reduced (for example the half) thickness compared to a cell-spacer which is adhered to only one longitudinal side 17, 18 of each battery cell 11, 12, 13, 14. Furthermore, if only one cell-spacer or spacer stripe with the doubled thickness would be adhered to only one longitudinal side 17, 18 of the battery cells 11, 12, 13, 14, these cost effective assembly processes would not be possible, such as by unrolling the spacer foil from the roll, because the cell-spacer would be too stiff to be rollable due to its thickness.

The feature of the spacer stripes 24, 25, 26, 27, 28, 29 being adhered to both longitudinal sides 17, 18 of each battery cell 11, 12, 13, 14 has an additional positive effect as soon as the battery cells 11, 12, 13, 14 are stacked, which is a preferred embodiment of the invention. Until now the thickness of a cell-spacer within a stack had to be selected depending on the position of the cell-spacer within the stack. This was done while assembling the stack. For example a cell-spacer between battery cells had to be thicker than a spacer at an end of the stack in order to provide the same predetermined free space for swelling of each of the primary sides. Due to the invention, each battery cell 11, 12, 13, 14 is delivered to the stack assembly with the spacer stripes 24, 25 adhered to both longitudinal sides 17, 18 of the battery cell 11, 12, 13 and 14. Therefore, there is automatically only one single layer of spacer stripes 24, 25 provided between a battery cell 11 and an end plate 31 of the stack 10 and two spacer stripes 24, 25 are provided between two adjacent battery cells 11, 12, 13, 14, such that each battery cell 11, 12, 13, 14 has a predetermined free space 32, 33, 34 for swelling. Thus, the assembly process is enhanced.

The predetermined free space 32, 33, 34 for swelling and the thickness of a spacer stripes 24, 25, 26, 27, 28, 29 can be different for both longitudinal sides 17, 18. For example the spacer stripes 24, 25 on one longitudinal side 17 of a battery cell 11 could be thicker than the spacer stripes 24, 25 on the opposite longitudinal side 18 of the battery cell 11. This provides the advantage, that if some battery cells 11, 12, 13, 14 are orientated differently than the other battery cells 11, 12, 13, 14 within a stack 10, each of the longitudinal sides 17, 18 of each battery cell 11, 12, 13, 14 automatically has exactly the space needed for swelling without having to choose a cell-spacer with the correct thickness while assembling the stack 10. This reduces the possibility of errors and simplifies the assembly process.

Furthermore, the spacer stripe 24, 25, 26, 27, 28, 29 is adapted such that a central portion 17', 18' of the respective longitudinal side 17, 18 remains uncovered, as shown in Figs. 2 to 8. This is of advantage, because it allows swelling of the battery cells 11, 12, 13, 14 especially through the central portions 17', 18' of the battery cells 11, 12, 13, 14 during the usage of the battery cells. This in turn, prevents a hazardous explosion of the battery cells 11, 12, 13, 14 due to the opposition to the swelling of the battery cells 11, 12, 13, 14, which in turn would lead to a rise in pressure inside the individual battery cells 11, 12, 13, 14. According to the embodiment of the present invention, an optimal free space to the respective battery cells 11, 12, 13, 14 is provided, such that the battery cells 11, 12, 13, 14 of the stack 10 could swell through their respective central portions 17', 18' into their respective predetermined free space 32, 33, 34 for swelling. Hence, an overall reduction of pressure on the end plates 31 of battery module 30 due to the swelling of the respective battery cells 11, 12, 13, 14 is realized.

Moreover, the width of the spacer tape, that is also that of the spacer stripes 24, 25, 26, 27, 28, 29 is such that a ratio of the width of the spacer foil or the spacer stripes 24, 25, 26, 27, 28, 29 to the height of the longitudinal side 17, 18 of the battery cell 11 is in the range of 1:4 to 1:12. This is of advantage, because provides an optimal distribution of the spacer stripes 24, 25, 26, 27, 28, 29 on the surfaces of the longitudinal sides 17, 18 as well as an optimal uncovered region, that is the central region 17', 18', is ensured. Hence, overall the method S is an efficient method of assembling the stack 10 of battery cells 11, 12, 13, 14 which can be used to a higher degree of industrialization and enables cost reduction.

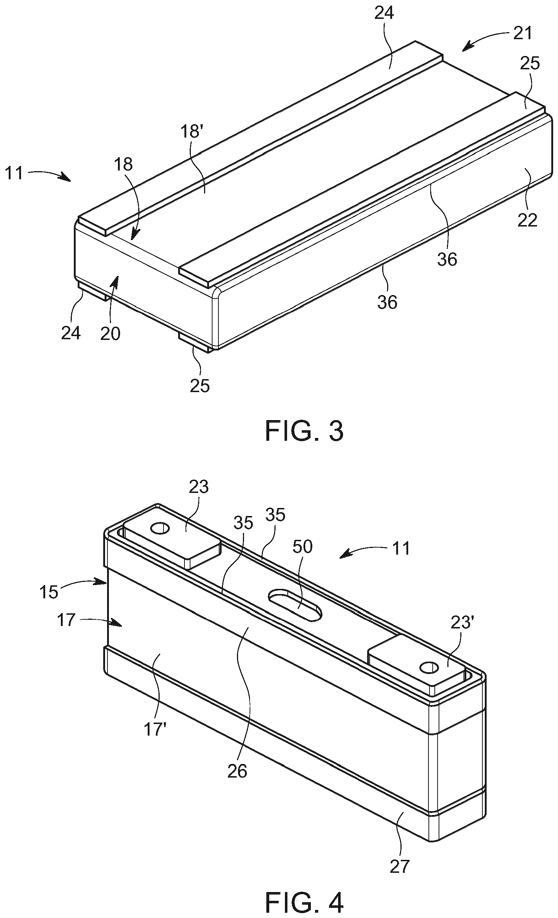

According to the embodiment shown in Figs. 2 and 3, the step S3 of adhering comprises adhering two first spacer stripes 24, one on each of the longitudinal sides 17, 18 adjacent and parallel to an upper edge 35 of the battery cell 11, and adhering two second spacer stripes 25, one on each of the longitudinal sides 17, 18 adjacent and parallel to a bottom edge 36 of the battery cell 11. This ensures that the respective central portions 17' and 18' of the corresponding longitudinal sides 17 and 18 remain uncovered.

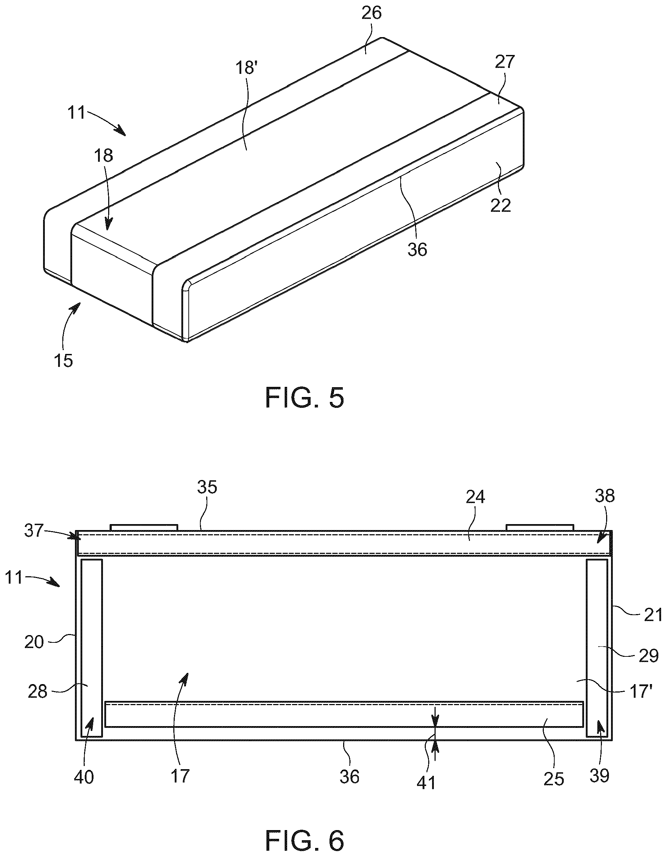

According to the embodiment shown in Figs. 4 and 5, the step S3 of adhering comprises adhering a first spacer stripe 26 by wrapping the first spacer stripe 26 around the case 15 adjacent and parallel to the upper edge 35 of the battery cell 11, and adhering a second spacer stripe 27 by wrapping the second spacer stripe 27 around the case 15 adjacent and parallel to the bottom edge 36 of the battery cell 11. This ensures that the respective central portions 17' and 18' of the corresponding longitudinal sides 17 and 18 remain uncovered.

The invention discloses a stack 10 of prismatic battery cells 11, 12, 13, 14 being arranged with their longitudinal sides 17, 18 abutting each other, as shown in Fig. 8, wherein spacer stripes 24, 25 are adhered on both longitudinal sides 17, 18 of each battery cell 11, 12, 13, 14, wherein the spacer stripe 24, 25 is adapted such that a central portion 17', 18' of the respective longitudinal side 17, 18 remains uncovered, wherein the spacer stripes 24, 25 have a thickness of 300 µm to 550 µm and a width of each of the spacer stripes 24, 25 is such that a ratio of the width of the spacer stripe 24, 25 to the height of the longitudinal side 17, 18 of the battery cell 11, 12, 13, 14 is in the range of 1:4 to 1:12. The width of the spacer stripe 24, 25 lies within a range of 12 to 15 mm. Furthermore, the spacer stripe 24, 25 is made of an electrically insulating and thermally insulating plastic material.

The predetermined free space 32, 33, 34 for swelling of the battery cells 11, 12, 13, 14 or for cell expansion between one battery cell 11, 12, 13, 14 to the other battery cell 11, 12, 13, 14 is approximately double the thickness of the spacer foil or the spacer stripes 24, 25. Furthermore, at the end of the battery module 30, where the end plate 31 is located, no separate part for a symmetrical cell-expansion of the border battery cell 11 is needed because there is only one spacer band comprising the spacer stripe 24, 25.

According to the embodiment shown in Figs. 6 and 7, the step of S3 adhering comprises adhering two first spacer stripes 24, one on each of the longitudinal sides 17, 18 adjacent and parallel to an upper edge 35 of the battery cell 11, and adhering four transverse spacer stripes 28, 29, two on each of the respective longitudinal sides 17, 18 of the battery cell 11. Each of the transverse spacer stripes 28, 29 is adhered adjacent and parallel to a corresponding transverse side 20, 21 of the battery cell 11 and extends below the respective first spacer stripe 24 to a bottom edge 36 of the battery cell 11. The step of S3 adhering also comprises adhering two second spacer stripes 25, one on each of the longitudinal sides 17, 18 adjacent and parallel to a bottom edge 36 of the battery cell 11. Each of the second spacer stripes 25 is adhered in a space between the two transverse spacer stripes 28, 29 and parallel to the bottom edge 36 of the battery cell 11. In this embodiment, all four stiff corners 37, 38, 39, 40 of the respective longitudinal sides 17, 18 of the case 15 are covered by means of the space stripes 24, 25, 28, 29. This is of advantage, because this enables a protection of the corners 37, 38, 39, 40 of the case 15, which could be easily prone to external stress and lead to a damage of the battery cell 11 as a whole.

Furthermore, the second spacer stripe 25 is adhered at a predefined distance 41 lying within a range of 5.5 mm to 6.5 mm from the bottom edge 36 of the battery cell 11. This is of advantage, because it provides a region for a thermal conductive gap-filler at the base 22 of the battery cell 11. Furthermore, it could be necessary to use a higher amount of gap-filler between the base 22 of the case 15 and a battery module cooler (not shown in figures), especially in cases of bigger dispensing tolerances of the gap-filler. This excessive gap-filler can flow in the uncovered region provided by the predefined distance 41, thus, an uncontrolled higher gap between the battery cell 11 and the cooler can be avoided. Hence, second spacer stripe 25 is adhered at a predefined distance 41 lying within a range of 5.5 mm to 6.5 mm from the bottom edge 36, due to which the corners 39, 40 of the case 15 remain uncovered. The corners 39, 40 are covered by means of the transverse spacer stripes 28, 29.

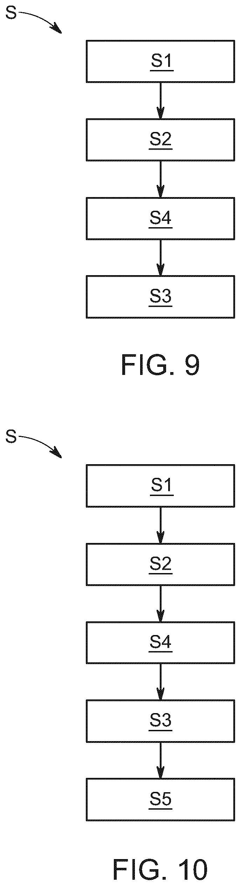

Fig. 9 shows a flow chart of a method S for assembling a stack 10 of prismatic battery cells 11, 12, 13, 14, according to an embodiment, the method S comprises a step S4 of applying electrical isolation onto at least one of the longitudinal sides 17, 18 prior to the step S3 of adhering at least one of the spacer stripes 24, 25, 26, 27, 28, 29, wherein the at least one spacer stripe 24, 25, 26, 27, 28, 29 is adhered to the electrical isolation of the corresponding longitudinal side 17, 18.

Fig. 10 shows a flow chart of a method S for assembling a stack 10 of prismatic battery cells 11, 12, 13, 14, according to an embodiment, the method S comprises a step S5 of stacking the prismatic battery cells 11, 12, 13, 14 in a battery module 30 after the step S3 of adhering the at least one spacer stripe 24, 25, 26, 27, 28, 29 to each of the corresponding longitudinal side 17, 18 of the corresponding battery cell 11, 12, 13, 14.

The invention further discloses a battery module 30 comprising the stack 10 of prismatic battery cells 11, 12, 13, 14.

The invention further discloses a vehicle including a battery pack comprising at least one battery module 30.

## Claims

1. A method (S) of assembling a stack (10) of prismatic battery cells (11, 12, 13, 14) wherein the battery cells (11, 12, 13, 14) in the stack (10) are arranged with their longitudinal sides (17, 18) abutting each other; the method (S) is carried out on a production line and comprises the following steps:
(i) (S1) providing a first device unit for handling the battery cells (11, 12, 13, 14);
(ii) (S2) providing a second device unit for supporting a roll of a spacer foil and assembling the spacer foil to the battery cells, the spacer foil being self-adhesive and having a thickness of 300 µm to 550 µm, wherein a width of the spacer foil is predetermined such that a ratio of the width of the spacer foil to the height of the longitudinal side (17, 18) of the battery cell (11, 12, 13, 14) is in the range of 1:4 to 1:12; and
(iii) (S3) adhering spacer stripes (24, 25, 26, 27, 28, 29) from the roll of the spacer foil by means of the second device unit on both longitudinal sides (17, 18) of each battery cell (11, 12, 13, 14), wherein the spacer stripe (24, 25, 26, 27, 28, 29) is adapted such that a central portion (17', 18') of the respective longitudinal side (17, 18) remains uncovered, wherein the spacer stripes (24, 25, 26, 27, 28, 29) adhered to opposing longitudinal sides (17, 18) of neighboring battery cells (11, 12, 13, 14) come into contact with each other when the battery cells (11, 12, 13, 14) are assembled in the stack (10).

2. The method (S) according to claim 1, wherein the step (S3) of adhering comprises:
(i) adhering two first spacer stripes (24) from the roll of the spacer foil, one on each of the longitudinal sides (17, 18) adjacent and parallel to an upper edge (35) of the battery cell (11, 12, 13, 14); and
(ii) adhering two second spacer stripes (25) from the roll of the spacer foil, one on each of the longitudinal sides (17, 18) adjacent and parallel to a bottom edge (36) of the battery cell (11, 12, 13, 14).

3. The method (S) according to claim 1, wherein the step (S3) of adhering comprises:
(i) adhering a first spacer stripe (26) from the roll of the spacer foil by wrapping the first spacer stripe (26) around a case (15) of the battery cell (11, 12, 13, 14) adjacent and parallel to an upper edge (35) of the battery cell (11, 12, 13, 14); and
(ii) adhering a second spacer stripe (27) from the roll of the spacer foil by wrapping the second spacer stripe (27) around the case (15) battery cell (11, 12, 13, 14) adjacent and parallel to a bottom edge (36) of the battery cell (11, 12, 13, 14).

4. The method (S) according to claim 1, wherein the step (S3) of adhering comprises:
(i) adhering two first spacer stripes (24) from the roll of the spacer foil, one on each of the longitudinal sides (17, 18) adjacent and parallel to an upper edge (35) of the battery cell (11, 12, 13, 14);
(ii) adhering four transverse spacer stripes (28, 29) from the roll of the spacer foil, two on each of the respective longitudinal sides (17, 18) of the battery cell (11, 12, 13, 14), wherein each of the transverse spacer stripes (28, 29) is adhered adjacent and parallel to a corresponding transverse side (20, 21) of the battery cell (11, 12, 13, 14) and extends below the respective first spacer stripe (24) to a bottom edge (36) of the battery cell (11, 12, 13, 14); and
(iii) adhering two second spacer stripes (25) from the roll of the spacer foil, one on each of the longitudinal sides (17, 18) adjacent and parallel to a bottom edge (36) of the battery cell (11, 12, 13, 14), wherein each of the second spacer stripes (25) is adhered in a space between the two transverse spacer stripes (28, 29) and parallel to the bottom edge (36) of the battery cell (11, 12, 13, 14).

5. The method (S) according any of the claims 2 to 4, wherein the second spacer stripe (25) is adhered at a predefined distance lying within a range of 5.5 mm to 6.5 mm from the bottom edge (36).

6. The method (S) according to any of the above mentioned claims, wherein the width of the spacer stripe (24, 25, 26, 27, 28, 29) lies within a range of 12 mm to 15 mm.

7. The method (S) according to any of the above mentioned claims, wherein the spacer stripe (24, 25, 26, 27, 28, 29) is made of an electrically insulating and thermally insulating plastic material.

8. The method (S) according to any of the above mentioned claims, wherein the method (S) comprises a step (S4) of applying electrical isolation onto at least one of the longitudinal sides (17, 18) prior to the step (S3) of adhering at least one of the spacer stripes (24, 25, 26, 27, 28, 29), wherein the at least one spacer stripe (24, 25, 26, 27, 28, 29) is adhered to the electrical isolation of the corresponding longitudinal side (17, 18).

9. The method (S) according to any of the above mentioned claims, wherein the method (S) comprises a step (S5) of stacking the prismatic battery cells (11, 12, 13, 14) in a battery module (30) after the step (S3) of adhering at least one of the spacer stripes (24, 25, 26, 27, 28, 29) to each of the corresponding longitudinal side (17, 18) of the corresponding battery cell (11, 12, 13, 14).

10. A stack (10) of prismatic battery cells (11, 12, 13, 14) being arranged with their longitudinal sides (17, 18) abutting each other, wherein spacer stripes (24, 25, 26, 27, 28, 29) are adhered on both longitudinal sides (17, 18) of each battery cell (11, 12, 13, 14), wherein the spacer stripe (24, 25, 26, 27, 28, 29) is adapted such that a central portion (17', 18') of the respective longitudinal side (17, 18) remains uncovered, wherein the spacer stripes (24, 25, 26, 27, 28, 29) have a thickness of 300 µm to 550 µm and a width of each of the spacer stripes (24, 25, 26, 27, 28, 29) is such that a ratio of the width of the spacer stripe (24, 25, 26, 27, 28, 29) to the height of the longitudinal side (17, 18) of the battery cell (11, 12, 13, 14) is in the range of 1:4 to 1:12, and wherein the spacer stripes (24, 25, 26, 27, 28, 29) adhered to opposite longitudinal sides (17, 18) of neighboring battery cells (11, 12, 13, 14) are in contact with each other in the stack (10).

11. The stack (10) of prismatic battery cell (11, 12, 13, 14) according to claim 10, wherein an electrical isolation is adhered onto at least one of the longitudinal sides (17, 18) of the battery cells (11, 12, 13, 14), wherein the at least one spacer stripe (24, 25, 26, 27, 28, 29) is adhered to the electrical isolation of the corresponding longitudinal side (17, 18).

12. The stack (10) of prismatic battery cell (11, 12, 13, 14) according to claims 10 or 11, wherein the width of the spacer stripe (24, 25, 26, 27, 28, 29) lies within a range of 12 mm to 15 mm.

13. The stack (10) of prismatic battery cell (11, 12, 13, 14) according to any of claims 10 to 12 wherein the spacer stripe (24, 25, 26, 27, 28, 29) is made of an electrically insulating and thermally insulating plastic material.

14. A battery module (30) comprising the stack of prismatic battery cells (11, 12, 13, 14) according any of the claims 10 to 13.

15. A vehicle including a battery pack comprising at least one battery module (30) of claim 14.

## Patentansprüche

1. Verfahren (S) zum Zusammenbau eines Stapels (10) prismatischer Batteriezellen (11, 12, 13, 14), wobei die Batteriezellen (11, 12, 13, 14) in dem Stapel (10) so angeordnet sind, dass ihre Längsseiten (17, 18) aneinanderliegen; das Verfahren (S) wird auf einer Produktionslinie durchgeführt und umfasst die folgenden Schritte:
(i) (S1) Bereitstellen einer ersten Vorrichtungseinheit zum Handhaben der Batteriezellen (11, 12, 13, 14);
(ii) (S2) Bereitstellen einer zweiten Vorrichtungseinheit zum Tragen einer Rolle einer Abstandsfolie und Zusammenbauen der Abstandsfolie an den Batteriezellen, wobei die Abstandsfolie selbstklebend ist und eine Dicke von 300 µm bis 550 µm aufweist, wobei eine Breite der Abstandsfolie so vorgegeben ist, dass ein Verhältnis der Breite der Abstandsfolie zur Höhe der Längsseite (17, 18) der Batteriezelle (11, 12, 13, 14) im Bereich von 1:4 bis 1:12 liegt; und
(iii) (S3) Aufkleben von Abstandsstreifen (24, 25, 26, 27, 28, 29) von der Rolle der Abstandsfolie mittels der zweiten Vorrichtungseinheit auf beide Längsseiten (17, 18) jeder Batteriezelle (11, 12, 13, 14), wobei der Abstandsstreifen (24, 25, 26, 27, 28, 29) so angepasst ist, dass ein mittlerer Abschnitt (17', 18') der jeweiligen Längsseite (17, 18) unbedeckt bleibt, wobei die an gegenüberliegenden Längsseiten (17, 18) benachbarter Batteriezellen (11, 12, 13, 14) haftenden Abstandsstreifen (24, 25, 26, 27, 28, 29) miteinander in Kontakt kommen, wenn die Batteriezellen (11, 12, 13, 14) im Stapel (10) zusammengebaut werden.

2. Verfahren (S) nach Anspruch 1, wobei der Schritt (S3) des Aufklebens umfasst:
(i) Aufkleben von zwei ersten Abstandsstreifen (24) von der Rolle der Abstandsfolie, jeweils einen an den Längsseiten (17, 18) benachbart und parallel zu einer Oberkante (35) der Batteriezelle (11, 12, 13, 14); und
(ii) Aufkleben von zwei zweiten Abstandsstreifen (25) von der Rolle der Abstandsfolie, jeweils einen an den Längsseiten (17, 18) benachbart und parallel zu einer Unterkante (36) der Batteriezelle (11, 12, 13, 14).

3. Verfahren (S) nach Anspruch 1, wobei der Schritt (S3) des Aufklebens umfasst:
(i) Aufkleben eines ersten Abstandsstreifens (26) von der Rolle der Abstandsfolie durch Wickeln des ersten Abstandsstreifens (26) um ein Gehäuse (15) der Batteriezelle (11, 12, 13, 14) benachbart und parallel zu einer Oberkante (35) der Batteriezelle (11, 12, 13, 14); und
(ii) Aufkleben eines zweiten Abstandsstreifens (27) von der Rolle der Abstandsfolie durch Wickeln des zweiten Abstandsstreifens (27) um die Batteriezelle (11, 12, 13, 14) des Gehäuses (15) benachbart und parallel zu einer Unterkante (36) der Batteriezelle (11, 12, 13, 14).

4. Verfahren (S) nach Anspruch 1, wobei der Schritt (S3) des Aufklebens umfasst:
(i) Aufkleben von zwei ersten Abstandsstreifen (24) von der Rolle der Abstandsfolie, jeweils einen an den Längsseiten (17, 18) benachbart und parallel zu einer Oberkante (35) der Batteriezelle (11, 12, 13, 14);
(ii) Aufkleben von vier quer verlaufenden Abstandsstreifen (28, 29) von der Rolle der Abstandsfolie, zwei auf jeder der jeweiligen Längsseiten (17, 18) der Batteriezelle (11, 12, 13, 14), wobei jeder der quer verlaufenden Abstandsstreifen (28, 29) benachbart und parallel zu einer entsprechenden Querseite (20, 21) der Batteriezelle (11, 12, 13, 14) aufgeklebt ist und sich unterhalb des jeweiligen ersten Abstandsstreifens (24) zu einer Unterkante (36) der Batteriezelle (11, 12, 13, 14) erstreckt; und
(iii) Aufkleben von zwei zweiten Abstandsstreifen (25) von der Rolle der Abstandsfolie, einen auf jeder der Längsseiten (17, 18) benachbart und parallel zu einer Unterkante (36) der Batteriezelle (11, 12, 13, 14), wobei jeder der zweiten Abstandsstreifen (25) in einem Raum zwischen den beiden quer verlaufenden Abstandsstreifen (28, 29) und parallel zur Unterkante (36) der Batteriezelle (11, 12, 13, 14) aufgeklebt wird.

5. Verfahren (S) nach einem der Ansprüche 2 bis 4, wobei der zweite Abstandsstreifen (25) in einem vordefinierten Abstand, der in einem Bereich von 5,5 mm bis 6,5 mm von der Unterkante (36) liegt, aufgeklebt wird.

6. Verfahren (S) nach einem der vorstehenden Ansprüche, wobei die Breite des Abstandsstreifens (24, 25, 26, 27, 28, 29) in einem Bereich von 12 mm bis 15 mm liegt.

7. Verfahren (S) nach einem der vorstehenden Ansprüche, wobei der Abstandsstreifen (24, 25, 26, 27, 28, 29) aus einem elektrisch isolierenden und thermisch isolierenden Kunststoffmaterial hergestellt ist.

8. Verfahren (S) nach einem der vorstehenden Ansprüche, wobei das Verfahren (S) einen Schritt (S4) des Aufbringens einer elektrischen Isolierung auf mindestens eine der Längsseiten (17, 18) vor dem Schritt (S3) des Aufklebens von mindestens einem der Abstandsstreifen (24, 25, 26, 27, 28, 29) umfasst, wobei der mindestens eine Abstandsstreifen (24, 25, 26, 27, 28, 29) auf die elektrische Isolierung der entsprechenden Längsseite (17, 18) aufgeklebt wird.

9. Verfahren (S) nach einem der vorstehenden Ansprüche, wobei das Verfahren (S) einen Schritt (S5) des Stapelns der prismatischen Batteriezellen (11, 12, 13, 14) in einem Batteriemodul (30) nach dem Schritt (S3) des Aufklebens von mindestens einem der Abstandsstreifen (24, 25, 26, 27, 28, 29) auf jede der entsprechenden Längsseiten (17, 18) der entsprechenden Batteriezelle (11, 12, 13, 14) umfasst.

10. Stapel (10) prismatischer Batteriezellen (11, 12, 13, 14), die mit ihren Längsseiten (17, 18) aneinanderliegend angeordnet sind, wobei auf beiden Längsseiten (17, 18) jeder Batteriezelle (11, 12, 13, 14) Abstandsstreifen (24, 25, 26, 27, 28, 29) aufgeklebt sind, wobei der Abstandsstreifen (24, 25, 26, 27, 28, 29) so angepasst ist, dass ein mittlerer Abschnitt (17', 18') der jeweiligen Längsseite (17, 18) unbedeckt bleibt, wobei die Abstandsstreifen (24, 25, 26, 27, 28, 29) eine Dicke von 300 µm bis 550 µm aufweisen und eine Breite jedes der Abstandsstreifen (24, 25, 26, 27, 28, 29) derart ausgebildet ist, dass ein Verhältnis der Breite des Abstandsstreifens (24, 25, 26, 27, 28, 29) zur Höhe der Längsseite (17, 18) der Batteriezelle (11, 12, 13, 14) im Bereich von 1:4 bis 1:12 liegt, und wobei die an gegenüberliegenden Längsseiten (17, 18) benachbarter Batteriezellen (11, 12, 13, 14) aufgeklebten Abstandsstreifen (24, 25, 26, 27, 28, 29) im Stapel (10) miteinander in Kontakt sind.

11. Stapel (10) prismatischer Batteriezellen (11, 12, 13, 14) nach Anspruch 10, wobei eine elektrische Isolierung auf mindestens eine der Längsseiten (17, 18) der Batteriezellen (11, 12, 13, 14) aufgeklebt ist, wobei der mindestens eine Abstandsstreifen (24, 25, 26, 27, 28, 29) auf die elektrische Isolierung der entsprechenden Längsseite (17, 18) aufgeklebt ist.

12. Stapel (10) prismatischer Batteriezellen (11, 12, 13, 14) nach Anspruch 10 oder 11, wobei die Breite des Abstandsstreifens (24, 25, 26, 27, 28, 29) in einem Bereich von 12 mm bis 15 mm liegt.

13. Stapel (10) prismatischer Batteriezellen (11, 12, 13, 14) nach einem der Ansprüche 10 bis 12, wobei der Abstandsstreifen (24, 25, 26, 27, 28, 29) aus einem elektrisch isolierenden und thermisch isolierenden Kunststoffmaterial hergestellt ist.

14. Batteriemodul (30), umfassend einen Stapel prismatischer Batteriezellen (11, 12, 13, 14) nach einem der Ansprüche 10 bis 13.

15. Fahrzeug mit einem Batteriepack, umfassend mindestens ein Batteriemodul (30) nach Anspruch 14.

## Revendications

1. Procédé (S) pour assembler un empilement (10) d'éléments de batterie prismatiques (11, 12, 13, 14), dans lequel les éléments de batterie (11, 12, 13, 14) dans l'empilement (10) sont agencés avec leurs côtés longitudinaux (17, 18) en butée les uns contre les autres ; le procédé (S) est réalisé sur une ligne de production et comprend les étapes suivantes consistant à :
(i) (S1) prévoir une première unité de dispositif pour manipuler les éléments de batterie (11, 12, 13, 14) ;
(ii) (S2) prévoir une seconde unité de dispositif pour supporter un rouleau d'une feuille d'espacement et assembler la feuille d'espacement avec les éléments de batterie, la feuille d'espacement étant auto-adhésive et ayant une épaisseur de 300 µm à 550 µm, où une largeur de la feuille d'espacement est prédéterminée de sorte qu'un rapport de la largeur de la feuille d'espacement sur la hauteur du côté longitudinal (17, 18) de l'élément de batterie (11, 12, 13, 14) est dans la plage de 1:4 à 1:12 ; et
(iii) (S3) fixer des bandes d'espacement (24, 25, 26, 27, 28, 29) du rouleau de la feuille d'espacement au moyen de la seconde unité de dispositif sur les deux côtés longitudinaux (17, 18) de chaque élément de batterie (11, 12, 13, 14), où la bande d'espacement (24, 25, 26, 27, 28, 29) est adaptée de sorte qu'une partie centrale (17', 18') du côté longitudinal (17, 18) respectif reste découverte, où les bandes d'espacement (24, 25, 26, 27, 28, 29) fixées sur les côtés longitudinaux (17, 18) opposés des éléments de batterie (11, 12, 13, 14) voisins viennent en contact entre elles lorsque les éléments de batterie (11, 12, 13, 14) sont assemblés dans l'empilement (10).

2. Procédé (S) selon la revendication 1, dans lequel l'étape (S3) de fixation comprend les étapes consistant à :
(i) fixer deux premières bandes d'espacement (24) du rouleau de la feuille d'espacement, une sur chacun des côtés longitudinaux (17, 18) adjacents et parallèles à un bord supérieur (35) de l'élément de batterie (11, 12, 13, 14) ; et
(ii) fixer deux secondes bandes d'espacement (25) du rouleau de la feuille d'espacement, une sur chacun des côtés longitudinaux (17, 18) adjacents et parallèles à un bord inférieur (36) de l'élément de batterie (11, 12, 13, 14) .

3. Procédé (S) selon la revendication 1, dans lequel l'étape (S3) de fixation comprend les étapes consistant à :
(i) fixer une première bande d'espacement (26) du rouleau de la feuille d'espacement en enroulant la première bande d'espacement (26) autour d'un boîtier (15) de l'élément de batterie (11, 12, 13, 14) adjacent et parallèle à un bord supérieur (35) de l'élément de batterie (11, 12, 13, 14) ; et
(ii) fixer une seconde bande d'espacement (27) du rouleau de la feuille d'espacement en enroulant la seconde bande d'espacement (27) autour du boîtier (15) de l'élément de batterie (11, 12, 13, 14) adjacent et parallèle à un bord inférieur (36) de l'élément de batterie (11, 12, 13, 14) .

4. Procédé (S) selon la revendication 1, dans lequel l'étape (S3) de fixation comprend les étapes consistant à :
(i) fixer deux bandes d'espacement (24) du rouleau de la feuille d'espacement, l'une sur chacun des côtés longitudinaux (17, 18) adjacents et parallèles à un bord supérieur (35) de l'élément de batterie (11, 12, 13, 14) ;
(ii) fixer quatre bandes d'espacement transversales (28, 29) du rouleau de la feuille d'espacement, deux sur chacun des côtés longitudinaux (17, 18) respectifs de l'élément de batterie (11, 12, 13, 14), où chacune des bandes d'espacement transversales (28, 29) est fixée de manière adjacente et parallèle à un côté transversal (20, 21) correspondant de l'élément de batterie (11, 12, 13, 14) et s'étend au-dessous de la première bande d'espacement (24) respective jusqu'à un bord inférieur (36) de l'élément de batterie (11, 12, 13, 14) ; et
(iii) fixer deux secondes bandes d'espacement (25) du rouleau de la feuille d'espacement, une sur chacun des côtés longitudinaux (17, 18) adjacents et parallèles à un bord inférieur (36) de l'élément de batterie (11, 12, 13, 14), où chacune des secondes bandes d'espacement (25) est fixée dans un espace entre les deux bandes d'espacement transversales (28, 29) et parallèles au bord inférieur (36) de l'élément de batterie (11, 12, 13, 14).

5. Procédé (S) selon l'une quelconque des revendications 2 à 4, dans lequel la seconde bande d'espacement (25) est fixée à une distance prédéfinie s'inscrivant dans une plage de 5,5 mm à 6,5 mm depuis le bord inférieur (36).

6. Procédé (S) selon l'une quelconque des revendications précédentes, dans lequel la largeur de la bande d'espacement (24, 25, 26, 27, 28, 29) s'inscrit dans une plage de 12 mm à 15 mm.

7. Procédé (S) selon l'une quelconque des revendications précédentes, dans lequel la bande d'espacement (24, 25, 26, 27, 28, 29) est constituée d'une matière plastique électriquement isolante et thermiquement isolante.

8. Procédé (S) selon l'une quelconque des revendications précédentes, le procédé (S) comprenant une étape (S4) consistant à appliquer l'isolation électrique sur au moins l'un des côtés longitudinaux (17, 18) avant l'étape (S3) consistant à fixer au moins l'une des bandes d'espacement (24, 25, 26, 27, 28, 29), dans lequel l'au moins une bande d'espacement (24, 25, 26, 27, 28, 29) est fixée sur l'isolation électrique du côté longitudinal (17, 18) correspondant.

9. Procédé (S) selon l'une quelconque des revendications précédentes, le procédé (S) comprenant une étape (S5) consistant à empiler les éléments de batterie prismatiques (11, 12, 13, 14) dans un module de batterie (30) après l'étape (S3) consistant à fixer au moins l'une des bandes d'espacement (24, 25, 26, 27, 28, 29) sur chacun des côtés longitudinaux (17, 18) correspondants de l'élément de batterie (11, 12, 13, 14) correspondant.

10. Empilement (10) d'éléments de batterie prismatiques (11, 12, 13, 14) qui sont agencés avec leurs côtés longitudinaux (17, 18) en butée les uns contre les autre, dans lequel des bandes d'espacement (24, 25, 26, 27, 28, 29) sont fixées sur les deux côtés longitudinaux (17, 18) de chaque élément de batterie (11, 12, 13, 14), dans lequel la bande d'espacement (24, 25, 26, 27, 28, 29) est adaptée de sorte qu'une partie centrale (17', 18') du côté longitudinal (17, 18) respectifs reste découverte, dans lequel les bandes d'espacement (24, 25, 26, 27, 28, 29) ont une épaisseur de 300 µm à 550 µm et une largeur de chacune des bandes d'espacement (24, 25, 26, 27, 28, 29) est telle qu'un rapport de la largeur de la bande d'espacement (24, 25, 26, 27, 28, 29) sur la hauteur du côté longitudinal (17, 18) de l'élément de batterie (11, 12, 13, 14) est dans la plage de 1:4 à 1:12, et dans lequel les bandes d'espacement (24, 25, 26, 27, 28, 29) fixées sur les côtés longitudinaux (17, 18) opposés des éléments de batterie (11, 12, 13, 14) voisins sont en contact entre elles dans l'empilement (10).

11. Empilement (10) d'éléments de batterie prismatiques (11, 12, 13, 14) selon la revendication 10, dans lequel une isolation électrique est fixée sur au moins l'un des côtés longitudinaux (17, 18) des éléments de batterie (11, 12, 13, 14), dans lequel l'au moins une bande d'espacement (24, 25, 26, 27, 28, 29) est fixée sur l'isolation électrique du côté longitudinal (17, 18) correspondant.

12. Empilement (10) d'éléments de batterie prismatiques (11, 12, 13, 14) selon la revendication 10 ou 11, dans lequel la largeur de la bande d'espacement (24, 25, 26, 27, 28, 29) s'inscrit dans une plage de 12 mm à 15 mm.

13. Empilement (10) d'éléments de batterie prismatiques (11, 12, 13, 14) selon l'une quelconque des revendications 10 à 12, dans lequel la bande d'espacement (24, 25, 26, 27, 28, 29) est constituée d'une matière plastique électriquement isolante et thermiquement isolante.

14. Module de batterie (30) comprenant l'empilement d'éléments de batterie prismatiques (11, 12, 13, 14) selon l'une quelconque des revendications 10 à 13.

15. Véhicule comprenant un bloc-batterie comprenant au moins un module de batterie (30) selon la revendication 14.
